# EUROPÄISCHE PATENTSCHRIFT

(11) **EP 1 105 066 B1**
(45) Veröffentlichungstag und Bekanntmachung des Hinweises auf die Patenterteilung: **03.03.2004**
(21) Anmeldenummer: 99942888.1
(22) Anmeldetag: 19.08.1999
(51) Int. Cl.: A61C 7/36

(54) **KIEFERORTHOPÄDISCHE VORRICHTUNG ZUM VORVERLAGERN DES UNTERKIEFERS**
ORTHODONTIC DEVICE FOR THE FORWARD DISPLACEMENT OF THE LOWER JAW
DISPOSITIF ORTHODONTIQUE PERMETTANT D'AVANCER LE MAXILLAIRE INFERIEUR

(30) Priorität: 19.08.1998 DE 19837555
(43) Veröffentlichungstag der Anmeldung: 13.06.2001
(73) Patentinhaber: DENTAURUM J.P. WINKELSTROETER KG, 75228 Ispringen (DE)
(72) Erfinder: BINDER, Friedrich, D-75249 Kieselbronn (DE)
(74) Vertreter: Wössner, Gottfried, Dr. Dipl.-Chem.
(86) Internationale Anmeldenummer: PCT/EP1999/006071
(87) Internationale Veröffentlichungsnummer: WO 2000/010481

(56) Entgegenhaltungen:
- US-A- 4 462 800
- US-A- 4 708 646
- US-A- 5 183 388
- US-A- 5 632 618

## Beschreibung

Die Erfindung betrifft eine kieferorthopädische Vorrichtung zum Vorverlagern des Unterkiefers eines Patienten, üblicherweise Herbstscharnier genannt.

Solche Vorrichtungen umfassen ein Paar an Teleskopen, die jeweils aus einem Metall-Teleskoprohr und einer darin geführten Metall-Gleitstange bestehen und beidseits des Patientenkiefers, beispielsweise über orthodontische Bänder, am Ober- und Unterkiefer des Patienten befestigt werden.

Die in der Literatur als Herbst-Scharnier bekannte Vorrichtung kann mit einem künstlichen Gelenk zwischen Ober- und Unterkiefer verglichen werden (H. Pancherz, Kleines Lehrbuch der Angle-Klasse II,1 unter besonderer Berücksichtigung der Behandlung, Kapitel 16, Seiten 225 bis 251, Quintessenz Verlags-GmbH, Berlin). Im geschlossenen Zustand des Kiefers sind die Teleskope ganz zusammengeschoben, und damit kann das Herbst-Scharnier für therapeutisch gewünschte Vorschubkräfte auf den Unterkiefer sorgen.

Öffnet der Patient seinen Kiefer, so fährt die Gleitstange um eine gewisse Strecke aus dem Teleskoprohr heraus und gewährt damit dem Patienten für seine Kieferbewegungen einen beschränkten Spielraum. Bedingt durch die Steifigkeit der metallischen Teleskoprohre und Gleitstangen, ist das Herbst-Scharnier jedoch relativ starr und führt zu einer erheblichen Einschränkung der Bewegungsfreiheit des Unterkiefers. Bei ungünstiger Anpassung der Vorrichtung können auch unerwünscht große Kräfte auf den Kiefer ausgeübt werden oder die Vorrichtung kann dadurch auch zerstört werden.

Das Herbst-Scharnier ist in der Regel als sogenannte festsitzende Apparatur konzipiert, um während der Behandlung dauerhaft den notwendigen Vorschub auf den Unterkiefer auszuüben. Eine Möglichkeit der kurzzeitigen Entfernung der Vorrichtung zur Reinigung aus mundhygienischen Gründen ist dem Patienten aber verwehrt.

In der Literatur wurden unterschiedliche Lösungen für die Befestigung der Teleskope am Ober- und Unterkiefer diskutiert. Beispielsweise beschreibt das oben zitierte Lehrbuch die Verschraubung mit an den Molaren von Ober- und Unterkiefer fixierten Befestigungsteilen ebenso wie das US-Patent 4,462,800. Eine andere Lösung, die mit einer Verstiftung arbeitet, ist aus dem US-Patent 5,183,388 bekannt. Die Befestigung der Teleskopstangen an den Molaren über Kugelbolzen und Sicherungsringen empfiehlt die US 5 632 618 A.

Nachteilig bei all diesen Lösungen ist, daß die Befestigungselemente (z.B. Schrauben, Stifte, Sicherungsringe) naturgemäß sehr klein sein müssen, was beim Einsetzen oder Entfernen des Herbst-Scharniers auch für geübtes Personal eine Erschwernis bedeutet, wobei in Einzelfällen diese Kleinteile bei ungeschickter Handhabung vom Patienten verschluckt werden können.

Aufgabe der Erfindung ist es, eine Vorrichtung der eingangs beschriebenen Art derart weiterzubilden, daß trotz dem, daß der therapeutisch erwünschte Vorschub auf den Unterkiefer gewährleistet bleibt, dem Unterkiefer eine größerer Bewegungsfreiheit verschafft wird.

Diese Aufgabe wird bei der eingangs beschriebenen Vorrichtung erfindungsgemäß dadurch gelöst, daß die Teleskoprohre starr und die Gleitstangen elastisch verformbar ausgebildet sind und daß die Gleitstangen aus einem elastischen Kunststoff hergestellt sind, dessen Elastizitätsmodul im Bereich von 500 bis 2 500 N/mm² liegt, so daß die Teleskope im zusammengeschobenen Zustand, wie an sich bekannt, starr, jedoch im ausgefahrenen Zustand flexibel sind.

Dieses Konstruktionsprinzip stellt sicher, daß die erwünschten Vorschubkräfte im geschlossenen Zustand des Kiefers (gleichzeitig der zusammengeschobene Zustand der Teleskope) wirken können, geben aber dem Unterkiefer des zu behandelnden Patienten beim Öffnen des Kiefers (hier sind beim Herbst-Scharnier keine Vorschubkräfte wirksam) eine erheblich vergrößerte Bewegungsfreiheit.

Weiterhin kann bei einer anderen Ausführungsform der in dem Teleskoprohr geführte Abschnitt der Gleitstange einen konisch ausgebildeten Bereich umfassen. Sobald hier die Gleitstange um eine bestimmte Länge aus dem Teleskoprohr herausbewegt wurde, vergrößert sich das Spiel zwischen dem Teleskoprohr und der Gleitstange, was die Bewegungsfreiheit des Unterkiefers erhöht. Da die erfindungsgemäßen Gleitstangen darüber hinaus aus einem elastisch verformbaren Material gefestigt sind, wird ein besonders großer Effekt in Bezug auf die Vergrößerung der Bewegungsfreiheit des Unterkiefers erreicht.

Vorzugsweise erstreckt sich der konisch ausgebildete Bereich über mindestens ein Viertel der Länge der teleskopierenden Abschnitte der Gleitstangen. Damit wird bereits in einem relativ frühen Stadium der Öffnung des Kiefers mehr Bewegungsfreiheit für den Unterkiefer geschaffen.

Für eine merkliche Vergrößerung der Bewegungsfreiheit reicht schon ein Konizitätswinkel von ca. 2° aus. In der Regel reicht ein maximaler Konizitätswinkel von ca. 15° aus, um dem Patienten ein sehr stark verbessertes Tragegefühl zu vermitteln. Andererseits vermeidet eine Beschränkung des Konizitätswinkels auf 15° die Gefahr des Verkantens der Gleitstange in dem Teleskoprohr und gibt im ausgefahrenem Zustand des Teleskops nur eine geringe Querschnittsfläche der Mündung des Teleskoprohrs frei, über die unerwünschte Materialien wie z.B. Speisereste etc. in das Teleskop eindringen können, so daß dieses Limit auch unter mundhygienischen Gesichtspunkten empfohlen wird.

Ein bevorzugter Werkstoff ist gemäß vorliegender Erfindung Kunststoff. Er ist nicht nur leicht zu den benötigten Formen zu verarbeiten, sondern bietet auch ästhetische Vorteile gegenüber aus Metall hergestellten Teleskopen. Aus Kunststoff lassen sich die elastisch verformbaren Gleitstangen herstellen. Ebenfalls eignet sich Kunststoff für die Herstellung von Teleskoprohren. Bei letzteren empfiehlt sich insbesondere der Einsatz von transparentem Kunststoff, der nicht nur die Kontrolle der Wahl der richtigen Länge der Gleitstangen erlaubt, sondern darüber hinaus auch noch die Kontrolle der Sauberkeit und des mundhygienischen Zustands der Teleskope, insbesondere des Inneren des Teleskoprohres. Bevorzugte elastische Kunststoffe sind die der Polyolefine, EVA und Polyamide. Diese Kunststoffe weisen den geforderten Zug-E-Modul im Bereich von ca. 500 bis 2 500 N/mm² auf (DIN 53457) und zeigen bei der Schlagzähigkeitsprüfung (DIN 53453) keinen Bruch. Außerdem erlauben diese Kunststoffe eine elastische Auslenkung der Gleitstangen und/oder Teleskoprohre, ohne daß eine merkliche Verformung nach der Auslenkung zurückbleibt.

Bevorzugt werden auch bei der vorliegenden Erfindung Kugelgelenke zum Befestigen der Teleskope an Ober- und Unterkiefer verwendet. Hierbei dient ein am Zahn befestigter Kugelkopf zur Abstützung am Kiefer, während jeweils eine an einem Ende von Gleitstange und Teleskoprohr ausgebildete Kugelpfanne diesen Kugelkopf übergreift. Vorzugsweise wird die Kugelpfanne elastisch nachgiebig ausgebildet, so daß sich diese auf den zugehörigen Kugelkopf einschnappen läßt.

Das Einschnappen der Kugelpfanne auf dem zugehörigen Kugelkopf läßt sich durch die Wahl eines ausreichend elastischen Kunststoffes begünstigen. Allerdings sind hier Grenzen gesetzt, da die Kugelpfanne in sich so stabil sein muß, daß sie die Korrekturkräfte unverfälscht auf den Kugelkopf überträgt.

Alternativ kann die Kugelpfanne mit einem oder mehreren radial verlaufenden Schlitzen versehen sein, die bis zur Mündungsöffnung der Pfanne reichen. Hier läßt sich dann ein steiferer Kunststoff einsetzen.

Schließlich ist zu beachten, daß die Haltekräfte zwischen Kugelkopf und Kugelpfanne ausreichend groß sind, so daß ein unbeabsichtigtes Lösen der Schnappverbindung vermieden wird.

Günstig bei dieser Konstruktion ist auch wieder die Verwendung von Kunststoff für die Fertigung der Gleitstangen und der Teleskoprohre, die hier einstückig mit den Kugelpfannen ausgebildet werden. Für die Kugelköpfe empfiehlt sich allerdings die Verwendung von mundhygienisch unbedenklichen Metallen, wie z.B. nickelfreie Stähle oder Titan. Metallische Kugelköpfe halten nicht nur den Vorschubkräften, die sie auf den Unterkiefer übertragen sollen, besser stand, sondern sind auch einfacher mit der notwendigen Sicherheit, beispielsweise über Metall-Zahnbänder, an den Zähnen des Patienten zu befestigen.

Der besseren Reinigungsfreundlichkeit der Teleskope dient eine durchgehende Öffnung im Inneren der Teleskoprohre, die zu dem Hohlraum der Kugelpfanne führt. Damit läßt sich unbeabsichtigt in das Teleskoprohr eingedrungenes Fremdmaterial leicht auch vom Patienten selbst ausspülen, und die Teleskope können vom Patienten selbst in einem mundhygienisch einwandfreien Zustand gehalten werden. Hierbei hilft es natürlich, wenn die Teleskoprohre, wie bereits weiter oben vorgeschlagen, aus transparentem Kunststoff hergestellt sind.

Bei einer bevorzugten Ausführungsform ist vorgesehen, daß die Teleskoprohre in ihrem Inneren einen Anschlag für ein maximales Einschieben der Gleitstangen aufweisen. Beim Zusammenfahren des Teleskops und der damit verbundenen Übertragung der Vorschubkräfte stützt sich das entsprechende Ende der Gleitstange an dem Anschlag ab, und ein zu weites Einfahren der Gleitstange, gegebenenfalls verbunden mit einem Verklemmen des freien Endes der Gleitstange, wird damit vermieden. Dies gewährleistet darüber hinaus auch das Einhalten der therapeutisch gewünschten Vorschubkräfte im zusammengefahrenen Zustand des Teleskops.

Zusätzlich kann vorgesehen sein, daß man den Anschlag bildende Distanzstücke in das Teleskoprohr-Innere einfügt, um die Vorschubkräfte während der Behandlung des Patienten zu verändern, bzw. die Länge des Teleskops im zusammengefahrenen Zustand dem bereits eingetretenen Behandlungserfolg anzupassen. Alternativ kann dies natürlich mit dem Anpassen bzw. dem Austausch der Gleitstangen unterschiedlicher Länge geschehen.

Die Kraftübertragung kann auch, wie an sich bekannt, über einen Anschlag erfolgen, der an dem der Kugelpfanne benachbarten Ende der Teleskopgleitstange angeordnet ist. Dieser Anschlag stützt sich dann am freien Ende des Teleskoprohres ab.

Diese und weitere Vorteile der Erfindung sind Gegenstand der Unteransprüche und werden im folgenden anhand der Zeichnung noch näher erläutert. Es zeigen im einzelnen:
- Figuren 1 a) und b): eine schematische Darstellung der Funktionsweise der erfindungsgemäßen kieferorthopädischen Vorrichtung;
- Figur 2: einen Schnitt längs Schnittlinie 2-2 in der kieferorthopädischen Vorrichtung der Figur 1 a) gemäß einer ersten Ausführungsform;
- Figur 3: einen Kugelkopf zur Befestigung der erfindungsgemäßen kieferorthopädischen Vorrichtung an einem Zahn eines Patienten;
- Figur 4: eine Schnittansicht einer zweiten Ausführungsform der erfindungsgemäßen kieferorthopädischen Vorrichtung;
- Figur 5: eine Schnittansicht einer dritten Ausführungsform der erfindungsgemäßen kieferorthopädischen Vorrichtung; und
- Figur 6: eine Schnittansicht einer vierten Ausführungsform einer erfindungsgemäßen kieferorthopädischen Vorrichtung.

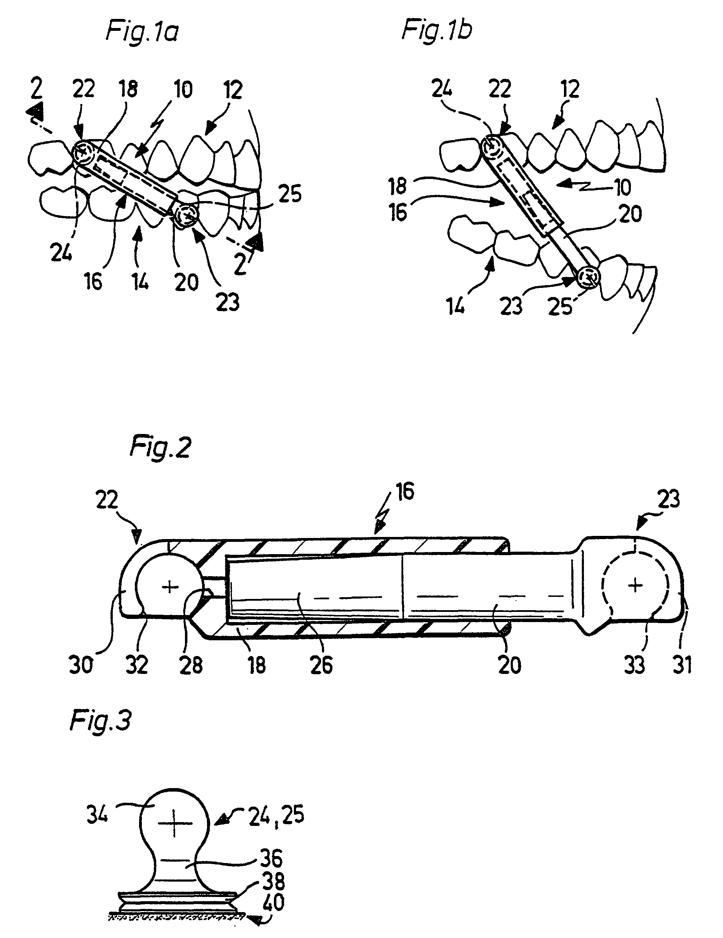

Figur 1 a) zeigt eine erfindungsgemäße, mit dem Bezugszeichen 10 bezeichnete kieferorthopädische Vorrichtung (im folgenden Herbst-Scharnier genannt), welche mit einem Ende an einem Oberkiefer 12 und mit einem anderen Ende am Unterkiefer 14 eines Patienten befestigt ist. Das Herbst-Scharnier wird paarweise beidseitig des Ober- und Unterkiefers des Patienten befestigt und dient der Vorverlagerung des Unterkiefers des Patienten.

Das erfindungsgemäße Herbst-Scharnier 10 umfaßt als wesentliche Bestandteile jeweils ein Teleskop 16 mit einem Teleskoprohr 18 und einer Teleskopgleitstange 20.

Jeweils ein Ende des Teleskops 16 ist mit dem Oberkiefer 12 bzw. mit dem Unterkiefer 14 verbunden.

Zu diesem Zwecke umfaßt das Teleskop 16 an jedem Ende in Fortsetzung einmal des Teleskoprohres 18, zum anderen in Fortsetzung der Teleskopgleitstange 20 eine Kugelpfanne 22, 23, die sich auf Kugelköpfe 24, 25 aufschnappen lassen, die jeweils an einem Zahn des Ober- bzw. Unterkiefers 12, 14 befestigt sind.

Die Kugelköpfe 24, 25 werden üblicherweise auf sogenannte orthodontische Bänder aufgeschweißt und die Bänder auf den zur Abstützung vorgesehenen Zahn aufgepaßt. Die orthodontischen Bänder sind in den Figuren 1 a) und 1 b) nicht dargestellt.

Im geschlossenen Zustand des Patientenkiefers (vgl. Figur 1 a)) wird durch das bis zum Anschlag zusammengeschobene Teleskop 16 eine Vorschubkraft zur Vorverlagerung des Unterkiefers 14 des Patienten erzeugt, so daß Ober- und Unterkiefer in der gewünschten idealen relativen Anordnung zueinander angeordnet sind.

Beim Öffnen des Kiefers (vgl. Figur 1 b)) wird das Teleskop 16 ausgefahren, d. h. die Teleskopstange 20 fährt aus dem Teleskoprohr 18 teilweise aus, wobei natürlich in diesem Zustand keine Korrekturkräfte mehr wirksam sind.

Die in Figur 2 vergrößert dargestellte Ausführungsform des Teleskops 16 weist erfindungsgemäß an dem in dem Teleskoprohr 18 teleskopierend angeordneten Ende der Teleskopgleitstange 20 einen sich konisch verjüngenden Abschnitt 26 auf, der sich über mehr als die halbe Länge des in dem Teleskoprohr 18 im eingefahrenen Zustand aufgenommenen Anteils der Teleskopgleitstange 20 erstreckt. Der Konizitätswinkel beträgt hier ca. 10°.

Das Teleskoprohr 18 weist an seinem der Kugelpfanne 22 benachbarten Ende einen Boden mit einem Durchbruch 28 auf, der das Volumen der Kugelpfanne 22 mit dem Innenraum des Teleskoprohrs 18 verbindet. Dadurch wird die Möglichkeit geschaffen, das Innere des Teleskoprohres 18 in einfacher Weise zu reinigen und insbesondere Ablagerungen, die im Laufe des Gebrauches des Herbst-Scharnieres im Inneren des Teleskoprohres 18 auftreten können, leicht auszuspülen.

Die beiden Kugelpfannen 22 und 23 weisen in der Ebene der Längsachse des Teleskops 16 einen in Radialrichtung verlaufenden Schlitz 30, 31 auf, der von einer jeweiligen Mündungsöffnung 32, 33 der Pfannen 22, 23 aus sich ungefähr um einen halben Umfangskreis des Kugelpfannenquerschnittes erstreckt.

Diese Schlitze 30, 31 vereinfachen das Aufschnappen der Kugelpfannen auf die zugehörigen Kugelköpfe 24, 25.

Figur 3 zeigt schließlich einen solchen beispielhaften Kugelkopf 24, 25, der einen Kugelabschnitt 34 umfaßt, welcher über einen Hals 36 an einer Basis 38 gehalten ist. Diese Basis 38 dient dem Aufkleben auf oder Verschweißen mit einem orthodontischen Band 40, das in Figur 3 nur angedeutet ist.

Wie bereits oben beschrieben, erlaubt die Ausführung der Gleitstange 20 mit dem konischen Bereich 26, daß schon bei einem geringfügigen Öffnen des Kiefers des Patienten und einem damit zusammenhängenden Ausfahren des Teleskops 16 nicht nur eine mesiale Beweglichkeit des Unterkiefers gegeben ist, sondern Kieferbewegungen in Querrichtung hierzu sind ebenfalls deutlich erleichtert. In gewissem Umfang tragen hierzu auch die Kugelkopf-/Kugelpfannenverbindungen mit bei.

Wird die Teleskopgleitstange 20 zusätzlich noch aus einem elastischen Material hergestellt, vermindert sich die Beschränkung der Beweglichkeit des Unterkiefers weiter, und der Tragekomfort für den Patienten steigt. Im eingefahrenen Zustand des Teleskops 16 (vgl. Figuren 1 a) und 2) wird jedoch eine ausreichend steife Struktur erhalten, da das Teleskoprohr 18 zusätzlich die Gleitstange 20 stützt und elastische Verformungen derselben im wesentlichen ausschließt. Dadurch läßt sich trotz der erheblich erweiterten Beweglichkeit des Herbst-Scharniers im ausgefahrenen Zustand bei geschlossenem Kiefer, d. h. bei zusammengefahrenem Teleskop, eine mit den herkömmlichen Herbst-Scharnieren vergleichbare, exakte Kraftübertragung auf den Unterkiefer erzielen.

Aufgrund des einfachen Schnappmechanismus' kann der Patient selber das Herbst-Scharnier zur Pflege der Zähne und zur hygienischen Behandlung des Herbst-Scharniers als solchem entfernen und dieses auch wieder montieren. Darüber hinaus entfällt bereits bei der Montage des Herbst-Scharnieres die Verwendung von Kleinteilen, die auch geübten Anwendern häufig Probleme in der Handhabung bereiten.

Dies führt zusätzlich auch bei der Kontrolle beim Zahnarzt zu kürzeren Behandlungszeiten.

Von besonderem Vorteil ist, wenn das Teleskoprohr 18 aus transparentem Kunststoff hergestellt ist, da sich so im eingebauten Zustand des Herbst-Scharniers sehr leicht die richtige Wahl der Teleskopstange 20 treffen läßt. Die Fertigung der Teleskopstange 20 aus Kunststoff hat den zusätzlichen Vorteil, daß hier vom behandelnden Arzt vorgefertigte Längen relativ einfach gekürzt werden können, so daß für den zunächst angestrebten Behandlungserfolg eine optimale Länge der Gleitstange 28 verwendet werden kann, ohne daß eine Vielzahl von unterschiedlich langen Gleitstangen bevorratet werden muß.

Eine alternative Vorgehensweise hierzu wäre die, Gleitstangen von konstanter Länge zu verwenden, jedoch mit zunehmendem Behandlungserfolg in das Innere des Teleskoprohres 18 weitere Anschläge, beispielsweise in Form von Ringen, einzufügen, die sukzessive die Einfahrlänge der Teleskopgleitstange 20 in das Rohr 18 parallel zum Behandlungserfolg verkürzen.

Auch hier wiederum hilft die transparente Ausgestaltung des Teleskoprohres 18, über die sehr leicht zu prüfen ist, ob die Festlegung des Anschlages für die Teleskopgleitstange 20 richtig gewählt wurde.

Die Fertigung aus Kunststoff hat den weiteren Vorteil, daß die Bauteile sehr viel preiswerter hergestellt werden können als korrespondierende Metallbauteile, so daß sich diese bei Abnutzung oder dergleichen im Laufe der Behandlung auch ohne größere Kosten austauschen lassen. Der Tragekomfort ist durch die flexible Gestaltung des Teleskops 16 deutlich verbessert, und auch die Mundhygiene kann von den Patienten quasi unvermindert wahrgenommen werden, da sie selbst das Herbst-Scharnier hierzu kurzzeitig entfernen und wieder selbst anbringen können. Dies hängt insbesondere damit zusammen, daß keine zusätzlichen Sicherungsmittel notwendig sind und die Herbst-Scharniere einfach auf die auf den Zähnen fest montiert bleibenden Kugelköpfe aufgeschnappt werden können.

Treten zu große Kräfte auf die Verbindungspunkte des Herbst-Scharniers mit dem Ober- bzw. Unterkiefer auf, kann sich die Vorrichtung selber ausklipsen, so daß auch hier eine Beschädigung des Herbst-Scharniers bzw. der Zähne sicher vermieden werden kann.

Bei einer Fertigung des Herbst-Scharniers aus Kunststoff bietet sich eine preiswerte Herstellung in einem Spritzgußwerkzeug an. Darüber hinaus werden durch die Herstellung des Herbst-Scharniers aus Kunststoff die Metallanteile, die im Mund getragen werden, weiter wesentlich reduziert. Den jeweils räumlichen Gegebenheiten der Ober- und Unterkiefer der Patienten läßt sich durch unterschiedlich lange Hälse 36 der Kugelköpfe 24, 25 Rechnung tragen.

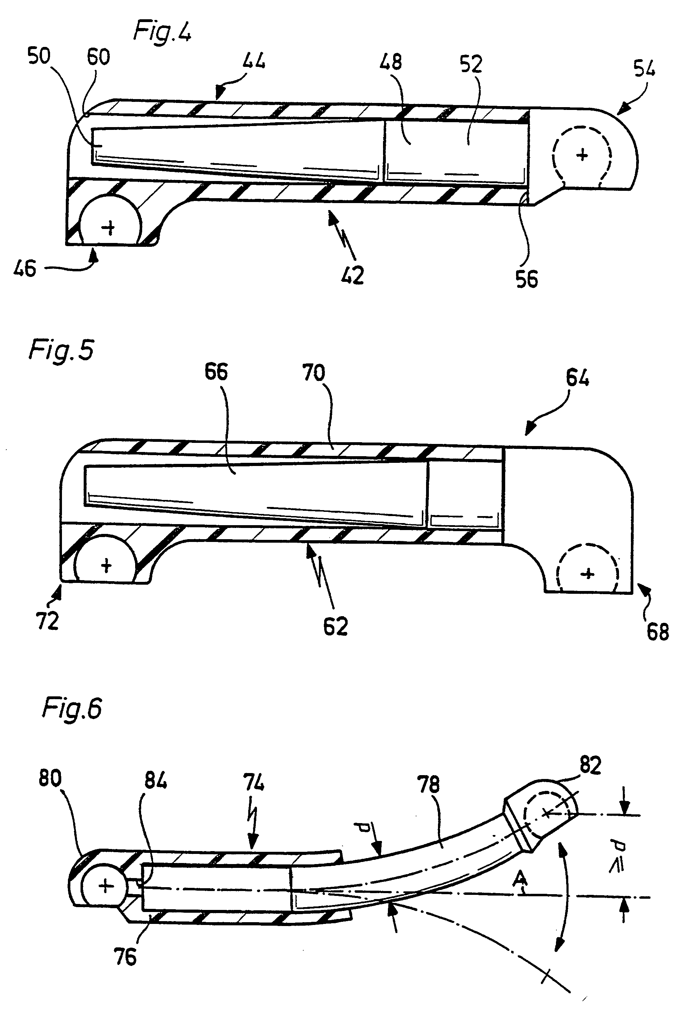

In Figur 4 ist eine zweite Ausführungsform der Erfindung gezeigt, bei der ein Teleskop 42 ein Teleskoprohr 44 umfaßt, welches an einem Ende in radialer Richtung abstehend eine Kugelpfanne 46 aufweist (in den Figuren 1 und 2 ist eine Ausführungsform gezeigt, bei der sich die Kugelpfanne in Axialrichtung an das Teleskoprohr anschließt). Eine in das Teleskoprohr 44 ganz eingeschobene Teleskopgleitstange 48 weist an ihrem freien Ende einen über ca. zwei Drittel der Länge der Gleitstange reichenden konischen Bereich 50 auf, an den sich ein zylindrischer Bereich 52 und (in dieser Abfolge) eine Kugelpfanne 54 anschließen. Die Kugelpfanne 54 ist hier in axialer Fortsetzung des zylindrischen Bereiches 52 angeordnet.

Die Kugelpfanne 54 grenzt an den zylindrischen Bereich 52 an, wobei letzterer gegenüber der Kugelpfanne 54 radial zurückspringt (Rücksprung 56). Im ganz eingeschobenen Zustand liegt der Rücksprung 56 am freien Ende des Teleskoprohres 44 an und bildet damit einen Anschlag.

Das dem freien Ende des Teleskoprohres gegenüberliegende Ende weist eine Öffnung 60 auf, die den Teleskoprohrinnenraum über dem vollen Querschnitt freigibt. Hierdurch wird eine besonders große Reinigungsfreundlichkeit des Teleskops erreicht.

Die Ausbildung der Kugelpfannen 46 und 54 kann analog der im Zusammenhang mit den Figuren 1 und 2 beschriebenen Ausführungsform erfolgen.

In Abweichung von der in Figur 4 dargestellten zweiten Ausführungsform weist die in Figur 5 dargestellte Ausführungsform eines erfindungsgemäßen Teleskops 62 eine Teleskopgleitstange 64 auf, welche einen konischen Bereich 66 umfaßt, der sich fast über die gesamte Länge des eingefahrenen Teleskopstangenteils erstreckt. Ferner ist hier die an der Teleskopgleitstange angeordnete Kugelpfanne 68 radial von der Gleitstange abstehend angeordnet und damit symmetrisch zu der von dem Teleskoprohr 70 abstehenden Kugelpfanne 72. Auch bei dieser Ausführungsform ist das der Kugelpfanne 72 benachbarte Ende des Teleskoprohres 70 offen gestaltet, so daß gegebenenfalls in das Teleskop eingedrungene Speisereste etc. mühelos entfernt werden können.

Eine an die erste, im Zusammenhang mit den Figuren 1 und 2 beschriebene, angelehnte Ausführungsform des erfindungsgemäßen Teleskops ist in Figur 6 gezeigt. Dort umfaßt das Teleskop 74 ein Teleskoprohr 76 und eine Teleskopgleitstange 78, die an jeweils entgegengesetzt angeordneten Enden in Axialrichtung sich anschließende Kugelpfannen 80, 82 tragen. Das Teleskoprohrinnere ist wieder mit einer durchgehenden Bohrung 84 mit dem Hohlraum der Kugelpfanne 80 verbunden, zwecks verbesserter Reinigungsmöglichkeit.

Im Unterschied zu der Ausführungsform der Figuren 1 und 2 umfaßt die Teleskopgleitstange 78 keinen konischen Bereich, sondern weist im wesentlichen über ihre gesamte Länge einen konstanten Durchmesser auf. Allerdings ist hier für die Fertigung der Teleskopstange 78 ein elastischer Kunststoff verwendet, der eine Auslenkung der Teleskopgleitstange am Kugelpfannenende aus der Axialrichtung A um mindestens den Durchmesser d erlaubt. Diese Maßangabe gilt für den Fall der maximal zulässig ausgefahrenen Teleskopgleitstange 78.

In diesem Ausführungsbeispiel wird die verbesserte Trageeigenschaft, d. h. die erhöhte Beweglichkeit des Unterkiefers, ausschließlich durch die Materialwahl bei der Herstellung der Gleitstange 78 sichergestellt. Im vorliegenden Fall wurde ein Polypropylenmaterial mit einem Zug-E-Modul von ca. 1 500 N/m² eingesetzt. Die Gleitstange 78 läßt sich wie gezeigt auslenken, ohne daß bei der Rückstellung bleibende Verformungen beobachtet werden.

Selbstverständlich kann diese Materialwahl kombiniert werden mit dem konischen Design des freien Endes der Gleitstange, wie dies in den Figuren 2, 4 und 5 dargestellt ist.

## Patentansprüche

1. Kieferorthopädische Vorrichtung zur Vorverlagerung des Unterkiefers eines Patienten mit einem Paar Teleskopen, welche jeweils ein Teleskoprohr und eine -gleitstange umfassen, welche mit ihren freien Enden jeweils über ein Gelenk am Ober- bzw. Unterkiefer des Patienten befestigbar sind, wobei die Teleskoprohre (18) starr und die Gleitstangen (20) elastisch verformbar ausgebildet sind. daß die Teleskope (16) im zusammengeschobenen Zustand, wie an sich bekannt, starr, jedoch im ausgefahrenen Zustand flexibel sind. und wobei die Gleitstangen (20) aus einem elastischen Kunststoff hergestellt sind, dessen Elastizitätsmodul im Bereich von 500 N/mm² bis 2 500 N/mm² liegt, so

2. Vorrichtung nach Anspruch 1, **dadurch gekennzeichnet, daß** die Gleitstangen (20) an ihren in den Teleskoprohren (18) gleitend gehaltenen Enden einen konisch ausgebildeten Bereich (26) aufweisen.

3. Vorrichtung nach Anspruch 2, **dadurch gekennzeichnet, daß** sich der konisch ausgebildete Bereich (26) der Gleitstangen (20) über mindestens ein Viertel der Länge des telekopierenden Abschnitts der Gleitstangen (20) erstreckt.

4. Vorrichtung nach Anspruch 2 oder 3, **dadurch gekennzeichnet, daß** der Konizitätswinkel im Bereich von 2° bis 15°, vorzugsweise von 5° bis 10° gewählt wird.

5. Vorrichtung nach einem der Ansprüche 1 bis 4, **dadurch gekennzeichnet, daß** die Teleskoprohre (18) aus transparentem Kunststoff hergestellt sind.

6. Vorrichtung nach einem der Ansprüche 1 bis 5, **dadurch gekennzeichnet, daß** die Gelenke Kugelgelenke sind und einen an einem Zahn des Patienten zu befestigenden Kugelkopf (24, 25) und eine an einem freien Ende der Teleskoprohre (18) bzw. -gleitstangen (20) angeordnete Kugelpfanne (22, 23) aufweisen, welche elastisch nachgiebig ausgebildet und in welche der zugehörige Kugelkopf (24, 25) einschnappbar ist.

7. Vorrichtung nach Anspruch 6, **dadurch gekennzeichnet, daß** die Kugelpfannen (22, 23) einstückig mit den Teleskoprohren (18) bzw. -gleitstangen (20) ausgebildet sind.

8. Vorrichtung nach Anspruch 6 oder 7, **dadurch gekennzeichnet, daß** die Kugelpfannen (22, 23) senkrecht zur Umfangslinie ihrer Öffnung verlaufende Schlitze (30, 31) aufweisen.

9. Vorrichtung nach einem der Ansprüche 6 bis 8, **dadurch gekennzeichnet, daß** die Teleskoprohre (18) eine Öffnung (28) aufweisen, welche den Hohlraum der Kugelpfanne (22) mit dem Innern der Rohre (18) verbindet.

## Claims

1. Orthodontic appliance for the forward displacement of the lower jaw of a patient, with a pair of telescopes, each comprising a telescopic tube and a telescopic slide rod, which are attachable at their free ends in each case via a joint to the patient's upper jaw and lower jaw, respectively, the telescopic tubes (18) being of rigid design and the slide rods (20) of elastically deformable design, and the slide rods (20) being made of an elastic plastic material whose modulus of elasticity lies in the range of from 500 N/mm² to 2,500 N/mm², so that the telescopes (16) in the telescoped state are rigid, as known per se, but in the extended state are flexible.

2. Appliance as defined in claim 1, **characterized in that** the slide rods (20) have a conical area (26) at their ends held slidingly in the telescopic tubes (18).

3. Appliance as defined in claim 2, **characterized in that** the conical area (26) of the slide rods (20) extends over at least one fourth of the length of the telescoping section of the slide rods (20).

4. Appliance as defined in claim 2 or 3, **characterized in that** the angle of taper is selected in the range of from 2° to 15°, preferably from 5° to 10°.

5. Appliance as defined in any one of claims 1 to 4, **characterized in that** the telescopic tubes (18) are made of a transparent plastic material.

6. Appliance as defined in any one of claims 1 to 5, **characterized in that** the joints are ball joints and comprise a ball head (24, 25) which is to be attached to a tooth of the patient, and disposed at a free end of the telescopic tubes (18) and the telescopic slide rods (20), respectively, a ball socket (22, 23) which is of elastically resilient design, and into which the associated ball head (24, 25) is snappable.

7. Appliance as defined in claim 6, **characterized in that** the ball sockets (22, 23) are integrally formed with the telescopic tubes (18) and the telescopic slide rods (20), respectively.

8. Appliance as defined in claim 6 or 7, **characterized in that** the ball sockets (22, 23) have slots (30, 31) extending at a right angle to the circumferential line of their opening.

9. Appliance as defined in any one of claims 6 to 8, **characterized in that** the telescopic tubes (18) have an opening (28) which joins the cavity of the ball socket (22) to the interior of the tubes (18).

## Revendications

1. Dispositif d'orthodontie pour déplacer vers l'avant le maxillaire inférieur d'un patient avec une paire d'éléments télescopiques qui comprennent chacun un tube télescopique et une barre coulissante télescopique, qui sont susceptibles d'être fixés par leurs extrémités libres via une articulation respective sur le maxillaire supérieur ou sur le maxillaire inférieur d'un patient, les tubes télescopiques (18) étant réalisés rigides et les barres coulissantes (20) étant réalisées élastiquement déformables, et les barres coulissantes (20) étant fabriquées à partir d'une matière plastique élastique dont le module d'élasticité est dans la plage de 500 N/mm² à 2500 N/mm², de sorte que les éléments télescopiques (16) sont rigides dans l'état rétracté, comme connu en soi, mais flexibles dans l'état déployé.

2. Dispositif selon la revendication 1, **caractérisé en ce que**, au niveau de leurs extrémités retenues mobiles en coulissement dans les tubes télescopiques (18), les barres coulissantes (20) comprennent une zone (26) réalisée en forme conique.

3. Dispositif selon la revendication 2, **caractérisé en ce que** la zone (26) réalisée en forme conique des barres coulissantes (20) s'étend sur un quart au moins de la longueur du tronçon télescopant des barres coulissantes (20).

4. Dispositif selon l'une ou l'autre des revendications 2 et 3, **caractérisé en ce que** l'angle de conicité est choisi dans la plage de 2° à 15°, de préférence de 5° à 10°.

5. Dispositif selon l'une des revendications 1 à 4, **caractérisé en ce que** les tubes télescopiques (18) sont réalisés en matière plastique transparente.

6. Dispositif selon l'une des revendications 1 à 5, **caractérisé en ce que** les articulations sont des articulations à rotule et comprennent une tête à rotule (24, 25) à fixer sur une dent du patient et une cavité de rotule (22, 23) qui est agencée à une extrémité libre des tubes télescopiques (18) ou des barres coulissantes (20) et qui est réalisée élastiquement flexibles et dans laquelle peut s'encliqueter la tête à rotule associée (24,25).

7. Dispositif selon la revendication 6, **caractérisé en ce que** les cavités de rotule (22, 23) sont réalisées d'un seul tenant avec les tubes télescopiques (18) ou avec les barres coulissantes (20).

8. Dispositif selon l'une ou l'autre des revendications 6 et 7, **caractérisé en ce que** les cavités de rotule (22, 23) présentent des fentes (30, 31) qui s'étendent perpendiculairement à la ligne périphérique de leur ouverture.

9. Dispositif selon l'une des revendications 6 à 8, **caractérisé en ce que** les tubes télescopiques (18) présentent une ouverture (28) qui relie le creux de la cavité de rotule (22) au volume intérieur des tubes (18).
